# EUROPÄISCHE PATENTSCHRIFT

(11) **EP 1 677 931 B1**
(45) Veröffentlichungstag und Bekanntmachung des Hinweises auf die Patenterteilung: **02.06.2010**
(21) Anmeldenummer: 04790098.0
(22) Anmeldetag: 02.10.2004
(51) Int. Cl.: B23B 27/16

(54) **VORRICHTUNG ZUR SPANABHEBENDEN BEARBEITUNG, VERWENDUNG DIESER VORRICHTUNG SOWIE VERFAHREN ZU DESSEM JUSTAGE**
MACHINING DEVICE, USE OF SAID DEVICE, AND METHOD FOR ALIGNING SAID DEVICE
DISPOSITIF D'USINAGE PAR ENLEVEMENT DE COPEAUX, UTILISATION DUDIT DISPOSITIF, METHODE D'ALIGNEMENT DUDIT DISPOSITIF

(30) Priorität: 31.10.2003 DE 10350877
(43) Veröffentlichungstag der Anmeldung: 12.07.2006
(73) Patentinhaber: Carl Zeiss Vision GmbH, 73430 Aalen (DE)
(72) Erfinder: BLUM, Norbert, 73460 Hüttlingen (DE)
(74) Vertreter: Gnatzig, Klaus
(86) Internationale Anmeldenummer: PCT/EP2004/011035
(87) Internationale Veröffentlichungsnummer: WO 2005/046915

(56) Entgegenhaltungen:
- DE-U- 20 307 208
- FR-A1- 2 271 894
- US-A- 1 410 714
- US-A- 5 159 863
- US-A1- 2003 043 343

## Beschreibung

Die Erfindung bezieht sich auf eine Vorrichtung zur spanabhebenden Bearbeitung gemäß dem Oberbegriff des Anspruchs 1.

Der Allgemeinheit sind einfache Schneidwerkzeuge zur spanabhebenden Bearbeitung bekannt, die an Werkzeughaltern auf vielfältige Art, z.B. mittels einer Schraubverbindung, angebracht sein können. Die exakte Positionierung des Schneidwerkzeuges zum Werkzeughalter kann dabei nur durch aufwendiges Ausprobieren, z.B. iteratives Schneiden oder mittels Einstellgeräten erzielt werden.

Aus der EP 0870563 A1 ist ein Schneidwerkzeug bekannt, bei dem ein Schneidelement über mehrere Verzahnungen im Schneidwerkzeug selber ausgerichtet werden kann. Nachteilig hieran ist, dass Schneidelement und Schneidwerkzeug nicht mit Markierungen versehen sind. In einem ersten Schritt muss folglich versucht werden Schneidelement und Schneidwerkzeug mittels eines Schlüssels in die gewünschte Position zu bringen. Anschließend kann die so erlangte Einstellung des Schneidwerkzeugs mit einem Einstellgerät überprüft werden. Sollte die vorgenommene Einstellung den gewünschten Werten noch nicht entsprechen, so ist sie nachzujustieren. Hierbei handelt es sich um ein sehr zeitaufwendiges Verfahren für das teure und hochwertige Einstellgeräte benötigt werden. Die Einstellung könnte auch durch iteratives Schneiden an Probewerkstücken erfolgen. Jedoch wäre auch diese Vorgehensweise zeitaufwendig und kostenintensiv.

Aus der DE 203 07 208 U1, von der die Erfindung ausgeht, ist ein Schaftfräser zum Stirn- und Walzfräsen bekannt, der mit einer Wendeschneidplatte bestückt ist, deren Anstellwinkel durch Verdrehen um ihren Mittelpunkt im Fräsergrundkörper stufenlos von 0 bis 90° mittels einer Skala einstellbar ist. Ein derartiger Schaftfräser ist jedoch nicht zur Bearbeitung von Brillengläsern geeignet.

Es ist daher die Aufgabe der Erfindung, eine Vorrichtung zur spanabhebenden Bearbeitung zur Verfügung zu stellen, mit der Schneidwerkzeug und Werkzeughalter einfach und schnell richtig zueinander positionierbar sind und welche sich besser zur Bearbeitung von Brillengläsern , insbesondere individuellen Brillengläsern eignet.

Die erfindungsgemäße Lösung besteht in einer Vorrichtung mit den Merkmalen des Anspruchs 1, in der Verwendung dieser Vorrichtung gemäß Anspruch 10, sowie in einem Verfahren zur Justage dieser Vorrichtung gemäß Anspruch 11.

Das Schneidwerkzeug umfasst eine Platte und ein an dieser befestigtes, insbesondere aufgelötetes Schneidelement. Dabei kann die Platte zumindest teilweise als kreisförmige Platte ausgebildet sein. Als Plattenmaterial kann Metall, insbesondere Hartmetall, zum Einsatz kommen. Als Schneidelement kann ein Diamant, insbesondere ein Naturdiamant, vorgesehen sein. Auch sind z. B. mit Diamantstaub besetzte metallische Schneiden oder Keramikschneiden vorstellbar. Das Schneidelement weist einen Öffnungswinkel von 40 - 80°, insbesondere von 60° auf. Der Radius des Schneidelementes kann zwischen 2 - 10 mm, insbesondere 5 mm betragen.

Erfindungsgemäß wird die Vorrichtung zur Bearbeitung von Brillengläsern, insbesondere von Gleitsichtflächen verwendet. Selbstverständlich können verschiedenste Arten von Brillengläsern, insbesondere individuelle Brillengläser mit der Vorrichtung bearbeitet werden. Die Vorrichtung kann aber auch in verschiedensten Bereichen zur spanabhebenden Bearbeitung von Glas, Keramik, Kunststoffen und Metallen eingesetzt werden.

Mit der erfindungsgemäßen Vorrichtung wird es ermöglicht, das Schneidelement sofort, also beim Befestigen des Schneidwerkzeugs auf dem Werkzeughalter für den Einbau in die Werkzeugmaschine, z.B. in eine HSC-Maschine (High-Speed-Cutting-Maschine), derart zu justieren, dass die spanabhebende Bearbeitung, z.B. beim Diamant-Drehverfahren, in der erwarteten Art und Weise abläuft. Somit kommt es nicht zu Beschädigungen an den Werkstücken durch falsches Schneiden. Zudem wird die Lebensdauer des Schneidwerkzeuges verlängert, was besonders bei kostspieligen Naturdiamanten von Belang ist. Insbesondere bei der Bearbeitung von Brillengläsern kommt es auf eine exakte Justage an, da nur so ein µm-genaues Abspanen des überschüssigen Materials ermöglicht wird. Aufgrund der einfachen Handhabung ergibt sich eine große Zeitersparnis, zudem entfallen die teuren Einstellgeräte.

In einer erfinderischen Weiterbildung können erste und weitere Markierung(en) als Nonius zusammenwirkend ausgebildet sein. D.h. die Markierungen an Werkzeughalter und Schneidwerkzeug ergeben zusammen gesehen einen Nonius. Somit sind feinste Einstellungen möglich.

Die erste(n) und weitere(n) Markierung(en) können als Markierungspunkte und/oder Markierungskreuze ausgebildet sein. Die Markierungen jeglicher Art können auf dem Schneidwerkzeug und Werkzeughalter aufgedruckt sein. Vorstellbar sind aber auch Gravuren und weitere Möglichkeiten des Aufbringens.

Weitere vorteilhafte Weiterbildungen der Erfindung sind in den Unteransprüchen berücksichtigt.

Die Erfindung wird im Folgenden näher unter Bezugnahme auf die drei Zeichnungen erläutert, die ein vorteilhaftes Ausführungsbeispiel veranschaulichen. Darin zeigen
- Fig. 1: ein Schneidwerkzeug und einen Werkzeughalter mit Noniusskala,
- Fig. 2: eine schrittweise Versetzung eines Diamanten auf der Glasoberfläche beim Schneiden und
- Fig. 3: eine Detailansicht des Diamanten.

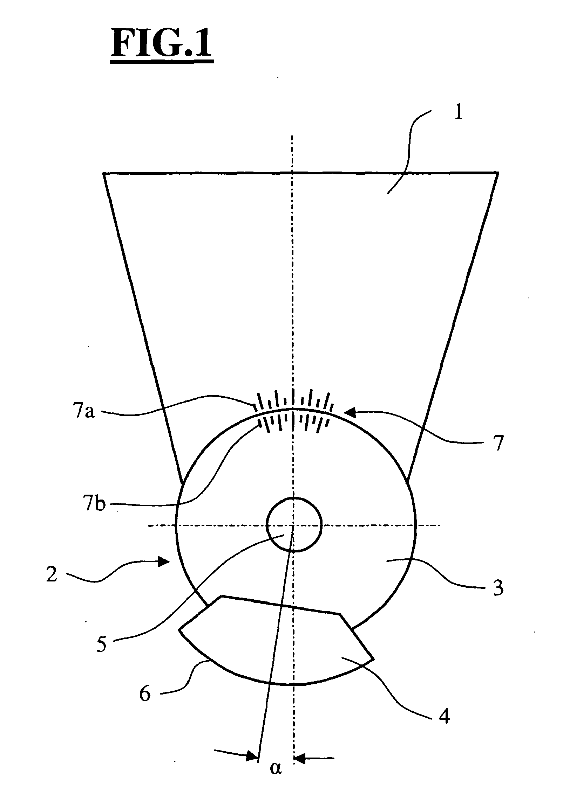

Fig. 1 ist eine Vorrichtung mit einem Werkzeughalter 1 zu entnehmen, auf dem ein Schneidwerkzeug 2 bestehend aus Hartmetallplatte 3 und Schneidelement 4 befestigt ist. Als Schneidelement 4 ist ein Naturdiamant vorgesehen. Die Befestigung des Schneidwerkzeuges 2 an dem Werkzeughalter 1 kann z.B. mittels einer Schraube 5 erfolgen. Eine senkrechte Strich-Punkt-Linie beschreibt die Längsachse durch den Werkzeughalter 1. Der Winkel α gibt die gewünschte Position des zu justierenden Schneidelements 4 von dieser Längsachse weg an. Die Verdrehung beträgt im vorliegenden Beispiel 10 °. Die Verdrehung kann je nach zu behandelnder Glasoberfläche mit oder gegen den Uhrzeigersinn erfolgen. Sie liegt üblicherweise in einem Rahmen von 5° bis 20 °, kann von diesen Werten aber auch abweichen. Eine solche Abweichung von der Längsachse des Werkzeughalters 1 wird vorgenommen, um eine Beschädigung der Glasoberfläche aufgrund eines Kontaktes mit der linken oder rechten Kante des Schneidelements zu vermeiden.

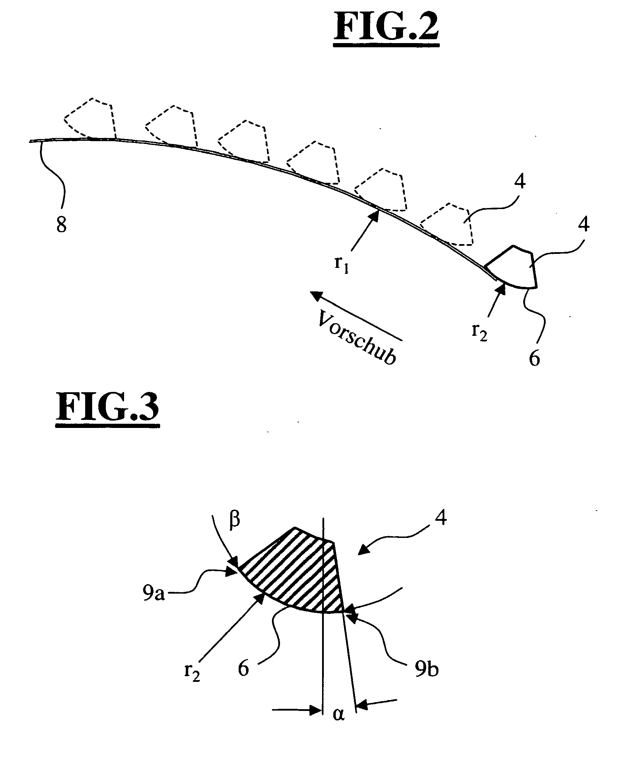

Bei der spanabhebenden Bearbeitung von Gleitsichtflächen bzw. individuellen Brillengläsern kommt in der Regel ein zweistufiges Verfahren zum Einsatz. Für den Grobschnitt wird zunächst eine sogenannte PKD-Platte, das heißt eine mit Diamantstaub besetzte metallische Schneide mit einem Radius von z.B. 8mm verwendet. Für den anschließenden Feinschnitt wird der Naturdiamant 4 verwendet, der auf der Hartmetallplatte 3 aufgelötet ist. Diese Platte 3 hat beispielsweise einen Radius von 4mm. Der beabsichtigte Vorschub der Diamantschneide 6 auf einer erst in Figur 2 dargestellten Glasoberfläche 8 beträgt beispielsweise20 bis 80 mm/min. Die Einstellung der Hartmetallplatte 3 samt Diamant 4 am Werkzeughalter 1 erfolgt über die an Schneidwerkzeug 2 und Werkzeughalter 1 zusammenwirkend angebrachte Noniusskala 7. Der Nonius 7 setzt sich zusammen aus ersten Markierungen 7a auf dem Werkzeughalter 1 und weiteren Markierungen 7b auf dem Werkzeug 2. Der Nonius 7 erlaubt eine genaue Einstellung der Platte 3 am Werkzeughalter 1 in Bruchteilen von Graden.

Fig. 2 ist der Vorschub des Diamanten 4 auf einer zu schneidenden Glasoberfläche 8 zu entnehmen. Dabei ist die Vorschubrichtung mit einem Pfeil angegeben. Die durch den Vorschub zu erlangenden Positionen des Diamanten 4 sind gestrichelt dargestellt. Die zu schneidende Glasoberfläche 8 weist einen Radius r₁ von 60 mm auf. Der Durchmesser der Glasoberfläche beträgt beispielsweise 70 mm. Der Diamant 4 hat bevorzugt einen Öffnungswinkel β = 60°. Daher muss der Diamant 4 sehr genau positioniert werden, um konvexe und konkave Flächen gut bearbeiten, d.h. schneiden zu können. Während des Schneidens kommt es nacheinander jeweils zu einer kurzen Berührung eines jeweiligen kleinen Bereichs der Diamantschneide 6 mit der zu bearbeitenden Glasoberfläche 8. Dabei wird die Vorrichtung mit dem Diamanten 4 kontinuierlich, z.B. von außen nach innen bewegt, so dass jeweils ein anderer Bereich der Schneide 6 beansprucht wird.

Fig. 3 ist ein Diamant 4 im Detail zu entnehmen. Der Diamant 4 weist eine Schneide 6 mit einem Radius r₂ = 5 mm auf, der Öffnungswinkel β des Diamanten beträgt 60. Die bei Befestigung am Werkzeughalter 1 vorzunehmenden Verdrehung α um 10° entgegen dem Uhrzeigersinn ist angedeutet. Eine Verdrehung gegen den Uhrzeigersinn wird bevorzugt bei der Bearbeitung konkaver Glasflächen vorgenommen. Durch die Verdrehung wird ein Zerstören der Glasoberfläche 8 durch Kontakt mit den Kanten 9a oder 9b des Diamanten 4 verhindert.

## Patentansprüche

1. Vorrichtung zur spanabhebenden Bearbeitung umfassend zumindest einen Werkzeughalter (1) und zumindest ein Schneidwerkzeug (2), wobei Werkzeughalter (1) und Schneidwerkzeug (2) lösbar miteinander verbunden sind, wobei
- an dem Werkzeughalter (1) zumindest eine erste Markierung (7a) angeordnet ist und
- an dem Schneidwerkzeug (2) zumindest eine weitere Markierung (7b) angeordnet ist und
- Werkzeughalter (1) und Schneidwerkzeug (2) mittels ihrer Markierung(en) (7a, 7b) beim Verbinden zueinander ausrichtbar sind ,
**dadurch gekennzeichnet, dass** das Schneidwerkzeug (2) eine Platte (3) und ein an dieser befestigtes Schneidelement (4) umfasst, wobei das Schneidelement (4) zwei einen Öffnungswinkel (β) von 40-80° einschließende Kanten (9a, 9b) und eine Schneide (6) mit einem Radius (r₂) aufweist.

2. Vorrichtung nach Anspruch 1 **dadurch gekennzeichnet, dass** erste und weitere Markierung(en) (7a, 7b) als Nonius (7) zusammenwirkend ausgebildet sind.

3. Vorrichtung nach Anspruch 1 oder 2, **dadurch gekennzeichnet, dass** erste und weitere Markierung(en) (7a, 7b) als Markierungspunkte und/oder Markierungskreuze ausgebildet sind.

4. Vorrichtung nach einem der vorhergehenden Ansprüche, **dadurch gekennzeichnet, dass** das Schneidelement (4) auf die Platte (3) aufgelötet ist.

5. Vorrichtung nach einem der vorhergehenden Ansprüche , **dadurch gekennzeichnet, dass** die Platte (3) zumindest teilweise als kreisförmige Platte ausgebildet ist.

6. Vorrichtung nach einem der vorhergehenden Ansprüche, **dadurch gekennzeichnet, dass** als Platte (3) eine Metallplatte, insbesondere eine Hartmetallplatte vorgesehen ist.

7. Vorrichtung nach einem der vorhergehenden Ansprüche, **dadurch gekennzeichnet, dass** als Schneidelement (4) ein Diamant, insbesondere ein Naturdiamant, vorgesehen ist.

8. Vorrichtung nach einem der vorhergehenden Ansprüche, **dadurch gekennzeichnet, dass** das Schneidelement (4) einen Öffnungswinkel von 60° aufweist.

9. Vorrichtung nach einem der vorhergehenden Ansprüche, **dadurch gekennzeichnet, dass** der Radius (r₂) des Schneidelements (4) 3 - 10 mm, insbesondere 5 mm beträgt.

10. Verwendung der Vorrichtung nach einem der vorangehenden Ansprüche zur Bearbeitung von Brillengläsern, insbesondere von Gleitsichtflächen.

11. Verfahren zum Justieren einer Vorrichtung nach einem der Ansprüche 1 bis 9 mit dem Verfahrensschritt: Einstellen eines Verdrehwinkels (α) des Schneidelements (4) zu einer Längsachse des Werkzeughalters (1) über die ersten und weiteren Markierungen (7a, 7b) derart, dass bei der spanabhebenden Bearbeitung ein Zerstören einer Oberfläche (8) durch Kontakt mit den Kanten (90, 96) des Schneidelements (4) verhindert wird.

12. Verfahren nach Anspruch 11, **dadurch gekennzeichnet, dass** der Verdrehwinkel (α) in Bruchteilen von Graden genau eingestellt wird.

## Claims

1. Device for cutting machining, comprising at least one toolholder (1) and at least one cutting tool (2), the toolholder (1) and cutting tool (2) being connected releasably to one another,
- at least one first marking (7a) being arranged on the toolholder (1), and
- at least one further marking (7b) being arranged on the cutting tool (2), and
- the toolholder (1) and cutting tool (2) being alignable with one another, during connection, by means of their marking or markings (7a, 7b),
**characterized in that** the cutting tool (2) comprises a plate (3) and a cutting element (4) fastened to the latter, the cutting element (4) having two cants (9a, 9b), which form an opening angle (β) of 40-80°, and a cutting edge (6) having a radius (r₂).

2. Device according to Claim 1, **characterized in that** the first and further marking or markings (7a, 7b) are designed to cooperate with one another as a Vernier scale (7).

3. Device according to Claim 1 or 2, **characterized in that** the first and further marking or markings (7a, 7b) are formed as marking points and/or marking crosses.

4. Device according to one of the preceding claims, **characterized in that** the cutting element (4) is soldered onto the plate (3).

5. Device according to one of the preceding claims, **characterized in that** the plate (3) is designed at least partially as a circular plate.

6. Device according to one of the preceding claims, **characterized in that** the plate (3) provided is a metal plate, in particular a hard-metal plate.

7. Device according to one of the preceding claims, **characterized in that** the cutting element (4) provided is a diamond, in particular a natural diamond.

8. Device according to one of the preceding claims, **characterized in that** the cutting element (4) has an opening angle of 60°.

9. Device according to one of the preceding claims, **characterized in that** the radius (r₂) of the cutting element (4) amounts to 3 - 10 mm, in particular 5 mm.

10. Use of the device according to one of the preceding claims for the machining of spectacle glasses, in particular of progressive lenses.

11. Method for adjusting a device according to one of Claims 1 to 9, having the method step: setting of a rotary angle (α) of the cutting element (4) to a longitudinal axis of the toolholder (1) via the first and further markings (7a, 7b), in such a way that, during the cutting machining, a destruction of a surface (8) due to contact with the cants (9a, 9b) of the cutting element (4) is prevented.

12. Method according to Claim 11, **characterized in that** the rotary angle (α) is set exactly in fractions of degrees.

## Revendications

1. Dispositif pour l'usinage par enlèvement de copeaux comprenant au moins un porte-outil (1) et au moins un outil de coupe (2), le porte-outil (1) et l'outil de coupe (2) étant connectés l'un à l'autre de manière desserrable,
- au moins un premier marquage (7a) étant disposé sur le porte-outil (1) et
- au moins un marquage supplémentaire (7b) étant disposé sur l'outil de coupe (2), et
- le porte-outil (1) et l'outil de coupe (2) pouvant être orientés l'un par rapport à l'autre au moyen de leur(s) marquage(s) (7a, 7b) lors de leur assemblage,
**caractérisé en ce que** l'outil de coupe (2) comprend une plaque (3) et un élément de coupe (4) fixé sur celle-ci, l'élément de coupe (4) présentant deux arêtes (9a, 9b) formant un angle d'ouverture (β) de 40-80°, et présentant une arête de coupe (6) avec un rayon (r₂).

2. Dispositif selon la revendication 1, **caractérisé en ce que** le premier marquage et le marquage supplémentaire (7a, 7b) sont réalisés de manière à coopérer sous forme de vernier (7).

3. Dispositif selon la revendication 1 ou 2, **caractérisé en ce que** le premier marquage et le marquage supplémentaire (7a, 7b) sont réalisés sous forme de points de marquage et/ou de croix de marquage.

4. Dispositif selon l'une quelconque des revendications précédentes, **caractérisé en ce que** l'élément de coupe (4) est brasé sur la plaque (3).

5. Dispositif selon l'une quelconque des revendications précédentes, **caractérisé en ce que** la plaque (3) est réalisée au moins en partie sous forme de plaque circulaire.

6. Dispositif selon l'une quelconque des revendications précédentes, **caractérisé en ce que** l'on prévoit comme plaque (3) une plaque métallique, notamment une plaque en métal dur.

7. Dispositif selon l'une quelconque des revendications précédentes, **caractérisé en ce que** l'on prévoit comme élément de coupe (4) un diamant, en particulier un diamant naturel.

8. Dispositif selon l'une quelconque des revendications précédentes, **caractérisé en ce que** l'élément de coupe (4) présente un angle d'ouverture de 60°.

9. Dispositif selon l'une quelconque des revendications précédentes, **caractérisé en ce que** le rayon (r₂) de l'élément de coupe (4) vaut 3 à 10 mm, notamment 5 mm.

10. Utilisation du dispositif selon l'une quelconque des revendications précédentes, pour l'usinage de verres de lunettes, notamment de surfaces de vue lisses.

11. Procédé pour l'ajustage d'un dispositif selon l'une quelconque des revendications 1 à 9, comprenant l'étape de procédé suivante : ajustement d'un angle de rotation (α) de l'élément de coupe (4) par rapport à un axe longitudinal du porte-outil (1) par le biais des premiers marquages et marquages supplémentaires (7a, 7b), de telle sorte que lors de l'usinage par enlèvement de copeaux, une destruction d'une surface (8) par contact avec les arêtes (9a, 9b) de l'élément de coupe (4) soit évitée.

12. Procédé selon la revendication 11, **caractérisé en ce que** l'angle de rotation (α) est ajusté précisément par fractions de degrés.
